# EUROPEAN PATENT APPLICATION

(11) **EP 2 134 101 A1**
(43) Date of publication of application: **16.12.2009**
(21) Application number: 08104385.3
(22) Date of filing: 12.06.2008
(51) Int. Cl.: H04Q 3/00

(54) **IN service free divert to voice mail**

(71) Applicant: Nokia Siemens Networks Oy, 02610 Espoo (FI)
(72) Inventor: Treschau, Claudio, 10318 Berlin (DE); Wiegand, Thomas, 34576 Homberg Efze (DE)
(74) Representative: Bruglachner, Thomas E.

(57) **Abstract**

An IN service Free Divert to Voice Mail FDTVM is a method of routing a call back to the voice mailbox of a called B-party when the B-party is roaming in a foreign network and a call forwarding service CF to the B-party's voice mailbox has been activated by the called party, which is established in the Service Control Point SCP of the home network HPLMN of the B-party, comprising a MTC-instance and a CF-instance, wherein the FDTVM service executes the following steps when the call is routed back from the foreign network VPLMN:
- triggering the IN service FDTVM by the core network, if the call comes from a foreign network and it is a call forwarding call,
- releasing the call by the CF-instance,
- signaling the call release to the MTC-instance, and
- routing the call directly to the voice mailbox by the MTC-instance.

## Description

The invention relates to a method of routing a call back to the voicemail box of a called party when the called party is roaming in a foreign network according to the introductory part of claim 1.

Roaming is the term in wireless telecommunications that refers to the extending of connectivity service in a location that is different from the home location where the service was registered. The term "roaming" originates from the GSM sphere (GSM: Global system for Mobile Communications). Traditional GSM roaming is defined as the ability for a cellular customer to automatically make and receive voice calls, send or receive data, or access other services, including home data services, when traveling outside the area of the home network, by means of using a visited network. This can be achieved by virtue of the subscriber identity in the visited network. Roaming is supported by mobility management, authentication, authorization and billing procedures.

The details of the roaming process differ among types of cellular networks, but in general, the process resembles the following:

When the mobile device is turned on or is transferred via a handover from its home network HPLMN to the new visited network VPLMN, this visited network sees the device, notices that it is not registered with its own system, and attempts to identify its home network. If there is no roaming agreement between the two networks, maintenance of service is impossible and the visited network denies service.

If a roaming agreement exists, the visited network contacts the home network and requests service information about the roaming device using the international mobile subscription identity IMSI, including whether or not the mobile should be allowed to roam.

If successful, the visited network begins to maintain a temporary subscriber record for the device. Likewise, the home network updates its information to indicate that the mobile is on the host network so that any information sent to that device can be correctly routed.

If a call from a calling party, in the following called A-party, is made to a roaming mobile, in the following called B-party, the public telephone network routes the call to the phone's registered service provider, i.e. the home network, who then must route it to the visited network. That network must then provide an internal temporary phone number to the mobile. Once this number is defined, the home network forwards the incoming call to the temporary phone number, which terminates at the host network and is forwarded to the mobile.

In case the roaming mobile, i.e. the B-Party, is not able to take the call, because the B-party is busy or not reachable due to a dead spot, the call will be routed back to the home network where the call is handled according to the user's settings.

Assuming that the B-party has activated its voice mailbox, the call will now be routed thereto. This has the effect, that a first international leg to the visiting network of the roaming mobile as well as a second international leg from the visited network back to voice mailbox of the home network were established. Now, as long as the A-party is calling, both international legs stay active with the effect of generating costs, because both legs have to be paid either by one or both of the users, i.e. A-party or B-party, or the network operator. At the end, both the network operator and the users are dissatisfied about the costs.

This problem further increases, because regulatory organizations require that forwarding a call to a voice mailbox shall be free of charge independent from the location of the called party. In other words, it is required that there should be no influence on the costs if the user is roaming in a visited network or if the user is located in his home network.

To overcome the problem above, proposed or existing current solutions show the following disadvantages:
The home network operator need to have an agreement with the network operator the user is roaming in, which is known as Optimal Routing as core network feature. However, normally the other network operator is not interested in such an agreement since it reduces his revenue. Therefore, Optimal Routing is widely not implemented although it is standardized since years.
CAMEL (Customized Applications for Mobile networks Enhanced Logic) must be supported in the visited network. This solution does not work if the user is roaming in a non-CAMEL network.

Current solutions are normally not able to interact with existing post-paid IN services (IN = Intelligent network). In result, the interaction feature has to be integrated in every IN-service that already exists. For most network operators this is not acceptable due to costs and effort reasons.

In result, present solutions are technically too complex and are difficult to integrate in existing networks.

Therefore, it is an object of the invention to provide a service wherein a call to a not reachable roaming mobile is routed back to the roaming mobile's voice mailbox in a more cost efficient way.

The above object is solved by a method with the features of claim 1. A preferred embodiment of the invention is subject of the dependent claim.

In the method according to the invention of routing a call back to the voice mailbox of a called B-party when the B-party is roaming in a foreign network and a Call Forwarding service CF to the B-party's voice mailbox has been activated by the called party, an IN-service "Free Divert to Voice Mail" FDTVM is established in the Service Control Point SCP of the home network HPLMN of the B-party, which comprises a MTC-instance and a CF-instance, wherein the IN service executes the following steps when the call is routed back from the foreign network VPLMN:
- triggering the IN service FDTVM by the core network, if the call comes from a foreign network and it is a Call Forwarding call,
- releasing the call by the CF-instance,
- signaling the call release to the MTC-instance, and
- routing the call directly to the voice mailbox by the MTC-instance.

In particular, the above method comprises the following steps:
- requesting a connection to a called B-party in the home network HPLMN of the B-party by an MTC-call of a calling A-party
- aquiring the identity number VLR_ID of the B-party in the visitor location register VLR of the foreign network VPLMN from the home location register HLR of the home network HPLMN of the B-party,
- triggering the MTC-instance due to the foreign identity number VLR_ID to register that the B-party is roaming in a foreign network,
- establishing the call in the foreign network VPLMBN to the B-party,
- detecting and executing a Call Forwarding to the voice mailbox of the B-party in the foreign network VPLMN to the home network HPLMN, if the B-party is not reachable, busy or not answering the call
- triggering the CF-instance, if the call comes from a foreign network and if the call is a Call Forwarding call,
- correlating the MTC-instance and the CF-instance and collecting the necessary information,
- releasing the call within the CF-instance,
- detecting the call release by the MTC-instance,
- establishing a direct connection to the voice mailbox by the MTC- instance.

Preferably, besides the identity number VLR_ID of the B-party a T_CSI information is sent back informing the core network that the B-party has a subscribed IN service.

As a result, due to the new method of the introduction of the generic IN service FDTVM, both international legs of the connection to the roaming B-party are removed and a direct connection of the call to the voice mailbox of the roaming party is established in its home network. This results in considerable lower costs because the international legs to the mobile of the roaming B-party are only active for a short time resulting in low connection costs.

### The service FDTVM shows the following advantages:

There is a total independence of the FDTVM service from other existing IN services like VPN, which means that no integration in other post-paid IN services is necessary.

The FDTVM service shows a total independence of service execution from roaming GSM network and the call control is completely done in the home network HPLMN using simple IN mechanisms.

The solution does not require any IN involvement in the visited network VPLMN, in other words, the CAMEL protocol is not needed and it will work in foreign networks without CAMEL support as well.

An expensive Call Forwarding CF control and administration mechanism during call establishment is not needed.

Further, there is no dependency on an agreement between the network operators of the home and the foreign network like it is necessary with Optimal Routing.

A preferred embodiment of the invention is described with the help of the following pictures, wherein
- Fig.1: shows the service during the MTC phase,
- Fig. 2: shows the service during the CF phase in HPLMN, and
- Fig.3: shows the MTC phase after the call release.

The following explanation of the IN-service Free Divert to Voice mail, i.e. FDTVM, describes the implementation and the advantages of this service. The FDTVM service consists of two instances, wherein both instances will be triggered only on the appearance of certain conditions, which is called a conditional triggering. This will decrease the load in the core network as well as the load in the IN system.

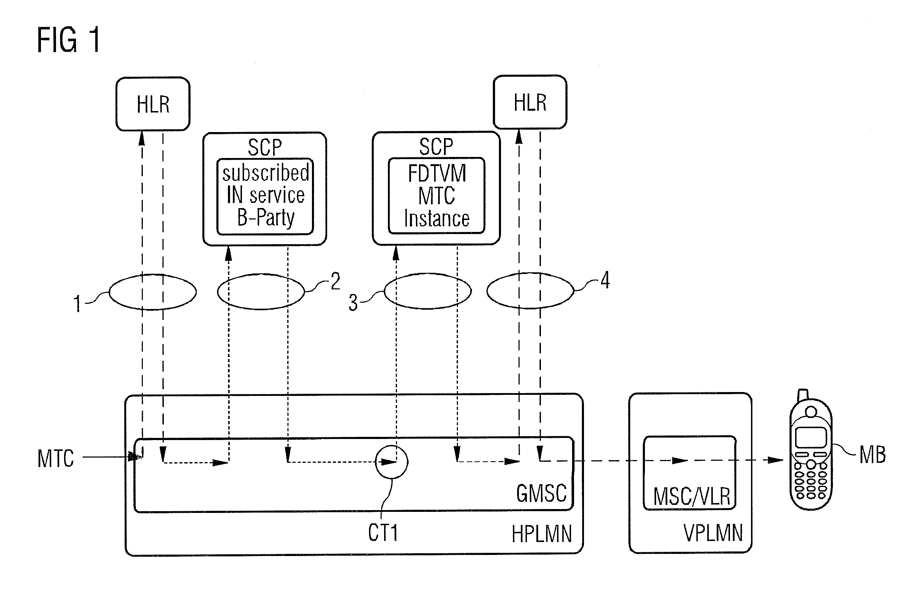

Figure 1 shows the MTC phase in the home network HPLMN of the called B-party, which is roaming in a visited (foreign) network VPLMN. An MTC-request enters the home network HPLMN of the called B-party and is prosecuted by the gateway mobile switching center GMSC. The gateway mobile switching center GMSC terminates the signaling and traffic formats according to the public switched telephone network and converts this to protocols employed in mobile networks.

In a first step 1, the gateway mobile switching center GSMC interacts with the home location register HLR to obtain routing information and whether the called party might have a subscribed IN service. Thus, the home location register HLR returns in step 1 the identifier VLR-ID in the visited location register VLR of the B-party in the visited network and optional an information about a subscribed IN service.

In a second step 2, which is optional, the service control point SCP is informed about the subscribed IN service of the B-party with an IDP message at a respective trigger point (not shown), if step 1 results in a subscribed service.

In a third step 3, an MTC instance of the FDTVM service in the service control point SCP is informed that the B-party is roaming in a foreign network. This information flow to the FDTVM service is triggered by a conditional trigger CT1 within gateway mobile switching center GMSC due to the foreign identifier VLR-ID of the B-party and the fact that the B-party belongs to the home network HPLMN. Calls to non-roaming users will not be triggered. As result, the B-party is registered within the FDTVM service as roaming in a foreign network. In step 3, the MTC instance sends a confirmation signal to the gateway mobile switching center GMSC and the call establishment within gateway mobile switching center GMSC goes on.

In a fourth step 4, the mobile station roaming number MSRN of the B-party in the foreign network VPLMN is inquired from the home location register HLR.

With this information, the call establishment goes on and the call to the B-party is routed to the mobile switching center MSC with its visitor location register VLR of the foreign network VPLMN. As result, the call is directed to the mobile phone MB of the called B-party and the call has been established.

After the call has been established to the mobile MB, the B-party might be busy, not answering the call or not reachable in the moment. Further, if the called B-party has administered to forward calls in such cases to its voice mailbox, i.e. activated call forwarding CF, the call will be forwarded back to the home network HPLMN of the B-party again.

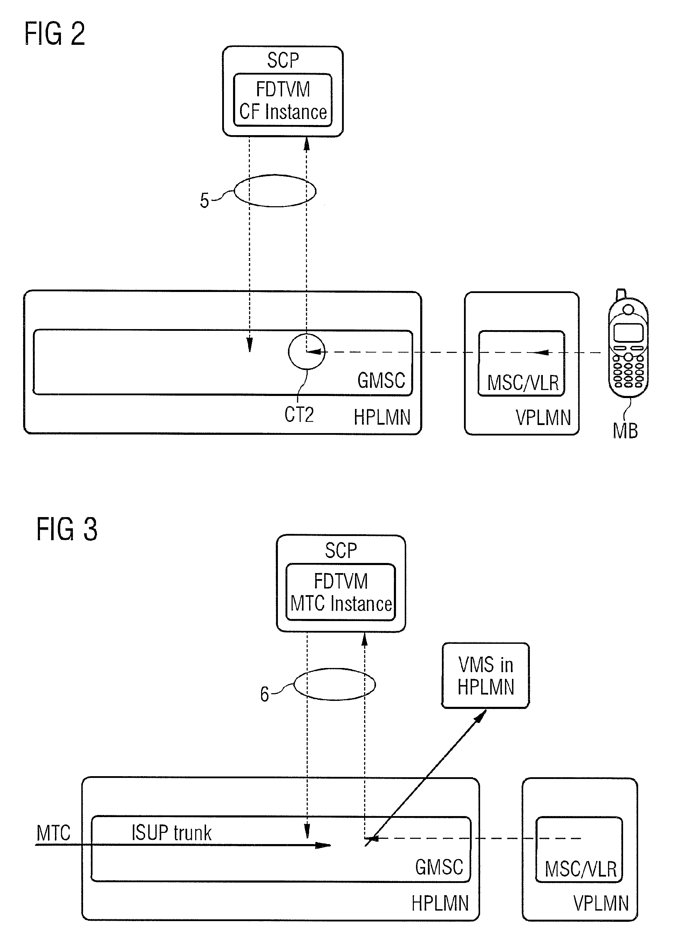

Fig. 2 depicts the situation of a call forwarding CF from a foreign network VPLMN to the home network HPLMN in the above described cases, when the mobile MB does not pick up the call. The call forwarded back to the gateway mobile switching center GMSC of the home network HPLMN is detected by a second conditional trigger point CT2. The call forwarding instance of the FDTVM service is triggered by the trigger point CT2 only if the call comes from a foreign network VPLMN and if it is a call forwarding CF call. Normal call from a foreign network will not be triggered.

The call forwarding CF instance of the service FDTVM executes the following actions in a fifth step 5:
- correlating both instances of the FDTVM service,
- collecting the necessary information form the MTC instance and the CF instance, and
- releasing the call within the CF instance.

These actions result in a release of both international legs by sending a release signal to the gateway mobile switching center GMSC.

Fig. 3 depicts the MTC phase of the call forwarding call in the home network HPLMN after call release. In a sixth step 6 the MTC instance of the FDTVM service is informed on the call release of the CF instance. It checks all available information and establishes a direct connection to the voice mailbox. As result, both international legs are removed.

In Fig. 3, this could be done, for example, by reporting "busy" from the gateway mobile switching center GMSC to service control point SCP, which in turn informs the gateway mobile switching center GSMC to direct the ISUP trunk of the calling A-party to connect directly to the voice mail box service VMS in the home network HPLMN of the called B-party.

As a result, the call forwarding service from a roaming mobile can be offered at low costs, because the international legs from the home network to the foreign network and back only exist for a short time and not throughout the whole call of the calling A-party.

## Claims

1. Method of routing a call back to the voice mailbox of a called B-party when the B-party is roaming in a foreign network and a Call Forwarding service CF to the B-party's voice mailbox has been activated by the called party, **characterized in that** an IN-service "Free Divert to Voice Mail" FDTVM is established in the Service Control Point SCP of the home network HPLMN of the B-party, comprising a MTC-instance and a CF-instance, wherein the FDTVM service executes the following steps when the call is routed back from the foreign network VPLMN:
- triggering the IN service FDTVM by the core network, if the call comes from a foreign network and it is a call forwarding call,
- releasing the call by the CF-instance,
- signaling the call release to the MTC instance, and
- routing the call directly to the voice mailbox service VMS by the MTC instance.

2. Method according to claim 1, **characterized by** the following steps:
- requesting a connection to a called B-party in the home network HPLMN of the B-party by an MTC-call of a calling A-party
- acquiring the identity number VLR_ID of the B-party in the visitor location register VLR of the foreign network VPLMN from the home location register HLR of the home network HPLMN of the B-party,
- triggering the MTC-instance due to the foreign identity number VLR_ID to register that the B-party is roaming in a foreign network,
- establishing the call in the foreign network VPLMBN to the B-party,
- detecting and executing a Call Forwarding to the voice mailbox of the B-party in the foreign network VPLMN to the home network HPLMN, if the B-party is not reachable, busy or not answering the call
- triggering the CF-instance, if the call comes from a foreign network and if the call is a Call Forwarding call,
- correlating the MTC-instance and the CF-instance and collecting the necessary information,
- releasing the call within the CF-instance,
- detecting the call release by the MTC-instance,
- establishing a direct connection to the voice mailbox by the MTC-instance.
